# EUROPEAN PATENT APPLICATION

(11) **EP 1 239 614 A2**
(43) Date of publication of application: **11.09.2002**
(21) Application number: 01308235.9
(22) Date of filing: 27.09.2001
(51) Int. Cl.: H04B 10/207

(54) **Equipment for distributing an optical signal**

(30) Priority: 05.03.2001 JP 2001060026
(71) Applicant: MITSUBISHI DENKI KABUSHIKI KAISHA, Tokyo 100-8310 (JP)
(72) Inventor: Kurauchi, Yasutaka, c/o Mitsubishi Denki KK, Chiyoda-ku, Tokyo 100-8310 (JP); Takahashi, Akira, c/o Mitsubishi Denki KK, Chiyoda-ku, Tokyo 100-8310 (JP); Makino, Shinya, c/o Mitsubishi Denki KK, Chiyoda-ku, Tokyo 100-8310 (JP)
(74) Representative: Carpenter, David

(57) **Abstract**

A wavelength - division - multiplexer / demultiplexer 60 for separating an optical video signal 103 directed to a subscriber and an optical data signal 104 directed to the subscriber from an optical signal output from a center station 10, an E/O converter 51 of a video signal for converting an optical video signal 103 directed to the subscriber separated by the wavelength - division - multiplexer / demultiplexer 60 into an electrical video signal, and an electrical signal distributor 52 for distributing an electrical signal received from the E/O converter 51 of the video signal to a plurality of subscribers' houses are provided. Hence, according to this invention, an optical component, which was provided in an equipment at each subscribers' houses 30a and 30b, becomes unnecessary.

## Description

### Background of the Invention

### Field of the Invention

This invention relates to an equipment for distributing an optical signal using a hybrid PON (Passive Optical Network) system, etc. connected to a passive optical fiber network through a coaxial cable.

### Description of the related Art

As a system using this kind of equipment, there is an optical CATV (cable television) system described in Japanese Unexamined Published Patent Application Hei 11 - 340924.

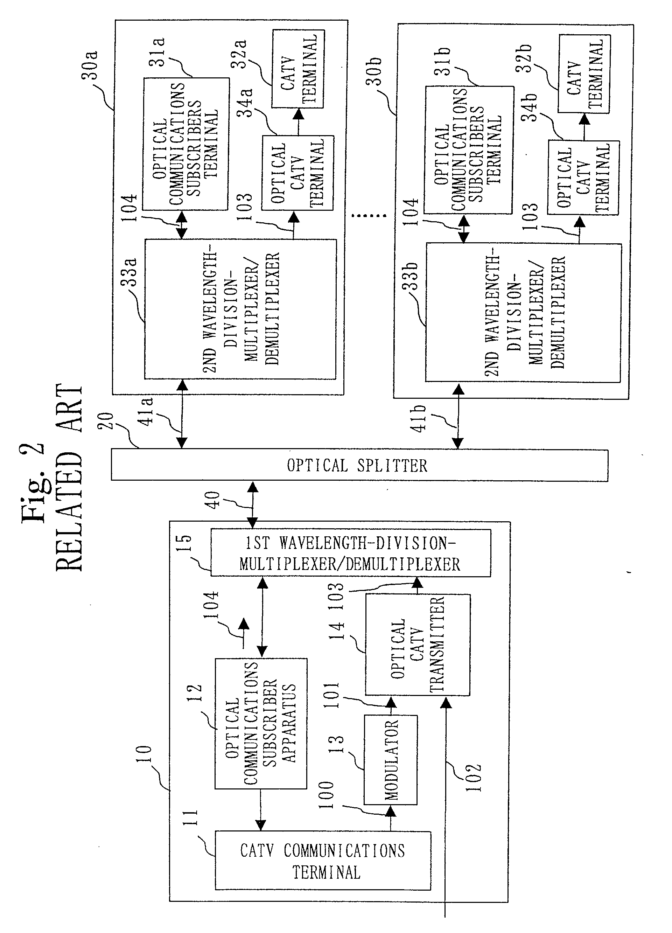

Fig. 2 shows a block diagram of the optical CATV system described in Japanese Unexamined Published Patent Application Hei 11 - 340924. In Fig. 2, a center station 10, a CATV communications terminal 11, an optical communications subscriber apparatus 12, and a modulator 13 for converting a CATV signal 100 directed to a subscriber, which is output from the CATV communications terminal 11, into a CATV carrier signal 101 directed to the subscriber are illustrated. An optical CATV transmitter 14 for receiving a frequency - division - multiplexed signal of the CATV carrier signal 101 directed to the subscriber, which is output from the modulator, and a video carrier signal 102 and outputting the frequency - division - multiplexed signal as an optical CATV signal 103 directed to the subscriber is also illustrated. A first wavelength - division - multiplexer / demultiplexer 15 for performing wavelength - division - multiplexing of the optical CATV signal 103 directed to the subscriber, which is output from the optical CATV transmitter 14, and an optical data signal 104 directed to the subscriber, which is output from the optical communications subscriber apparatus 12, are illustrated. In Fig. 2, an optical splitter 20 for receiving an optical signal output from the first wavelength - division - multiplexer / demultiplexer through a first optical transmission line 40 and distributing the received optical signal to each of subscribers' houses 30a and 30b, is also illustrated.

In Fig. 2, optical communications subscribers terminals 31a and 31b, CATV terminals 32a and 32b, and second wavelength - division - multiplexers / demultiplexers 33a and 33b respectively for separating the optical signal received from the optical splitter 20 through second optical transmission lines 41a and 41b and outputting the optical data signal 104 directed to the subscriber and the optical CATV signal 103 directed to the subscriber are illustrated. Optical CATV terminals 34a and 34b respectively for converting the optical CATV signal directed to the subscriber, which is received from the second wavelength - division - multiplexers / demultiplexers 33a and 33b, into the electrical CATV signal are also illustrated. For the sake of convenience, only two subscribers' houses 30a and 30b are illustrated. However, in an actual system, many subscribers' houses are connected to the optical splitter 20 through the second optical transmission lines.

Operations are explained.

In the center station 10, the CATV signal 100 directed to the subscriber, which is output from the CATV communications terminal 11, is input to the modulator 13 and converted to the CATV carrier signal 101 directed to the subscriber. Then, frequency - division - multiplexing of the CATV carrier signal 101 directed to the subscriber and a video carrier signal 102 is performed, and a frequency - division - multiplexed signal is input to the optical CATV transmitter 14. The optical CATV transmitter 14 generates the optical CATV signal 103 directed to the subscriber by converting a received electrical signal to an optical signal, and outputs the optical CATV signal 103 directed to the subscriber to the first wavelength - division - multiplexer / demultiplexer 15. The first wavelength - division - multiplexer / demultiplexer 15 performs wavelength - division multiplexing of the optical data signal 104 directed to the subscriber, and the optical CATV signal 103 directed to the subscriber. The optical data signal 104 directed to the subscriber is output from the optical communications subscriber apparatus 12. The optical CATV signal 103 directed to the subscriber is output from the optical CATV transmitter 14. Then, the first wavelength - division - multiplexer / demultiplexer 15 sends a multiplexed optical signal to the first optical transmission line 40.

The optical signal which is sent to the first optical transmission line is input to the optical splitter 20 configuring a passive - double - star (PDS) transmission line. Then, the signal is split, and sent to the subscribers' houses 30a and 30b through the second optical transmission lines 41a and 41b.

The optical signals sent to the subscribers' houses 30a and 30b are firstly input to the second wavelength - division - multiplexers / demultiplexers 33a and 33b. Then, the second wavelength - division - multiplexers / demultiplexers 33a and 33b respectively separate the input optical signal into the optical data signal 104 directed to the subscriber and the optical CATV signal 103 directed to the subscriber. The optical data signal 104 directed to the subscriber is input to the optical communications subscribers terminals 31a and 31b. The optical CATV signal 103 directed to the subscriber is input to the optical CATV terminals 34a and 34b. The optical CATV terminals 34a and 34b convert the optical CATV signal 103 directed to the subscriber into electrical signals, i.e., a carrier signal in CATV communications directed to the subscriber and a video carrier signal, and send the electrical signals to the CATV terminals 32a and 32b.

When a data signal directed to the center station is sent from the subscribers' houses 30a and 30b to the center station 10, the data signal is sent from the optical communications subscribers terminals 31a and 31b to the optical communications subscriber apparatus 12 in a reverse way with the above-stated operations.

### Summary of the Invention

Since the equipment for distributing the optical signal according to the related art was configured as above-stated, an expensive wavelength - division multiplexer / demultiplexer and an optical CATV terminal are necessary for each of the subscribers. Therefore, a cost of an equipment at a subscriber's house is high.

It is one of objects of this invention to solve the above - stated problems in the related art. Particularly, it is one of aims of this invention to obtain an equipment for distributing the optical signal which can reduce the cost of the equipment at the subscriber's house.

According to an aspect of this invention, an equipment for distributing an optical signal includes an E/O (Electrical / Optical) converter for receiving the optical signal sent from a center station and for converting the optical signal into an electrical signal and an electrical signal distributor for distributing the electrical signal converted by the E/O converter to a plurality of subscribers' houses.

According to another aspect of this invention, in the equipment for distributing the optical signal, the optical signal sent from the center station is a video signal.

According to another aspect of this invention, the equipment for distributing an optical signal includes a demultiplexer for separating an optical video signal and an optical data signal from the optical signal sent from a center station, an optical splitter for distributing the optical data signal separated by the demultiplexer to a plurality of subscribers' houses, an E/O converter for converting the optical video signal separated by the demultiplexer into an electrical signal, and an electrical signal distributor for distributing the electrical signal converted by the E/O converter to the plurality of subscribers' houses.

Further features and applications of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

Other objects features, and advantages of the invention will be apparent from the following description when taken in conjunction with the accompany drawings.

### Brief Description of the Drawings

Fig. 1 shows a block diagram in which an equipment for distributing an optical signal according to Embodiment 1 is applied to an optical CATV system; and
Fig. 2 shows a block diagram in which an equipment for distributing an optical signal according to the related art is applied to an optical CATV system.

### Detailed Description of the Preferred Embodiments

### Embodiment 1.

With reference to drawings, Embodiment 1 of this invention is explained.

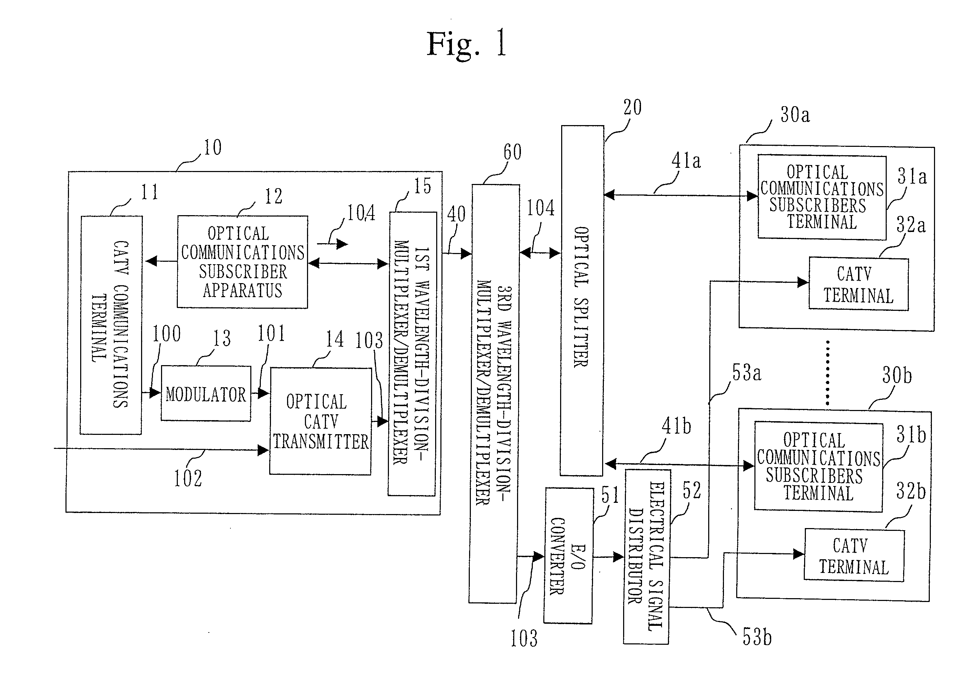

Fig. 1 shows a block diagram in which an equipment for distributing an optical signal according to this invention is applied to an optical CATV system.

In Fig. 1, a third wavelength - division - multiplexer / demultiplexer 60 receives an optical signal, which is output from the first wavelength - division multiplexer / demultiplexer 15, through the first optical transmission line 40, and separates the input optical signal into the optical CATV signal 103 directed to the subscriber and the optical data signal 104 directed to the subscriber. An E/O converter 51 of a video signal receives the separated optical CATV signal 103 directed to the subscriber, and converts an optical signal into an electrical signal, and an electrical signal distributor 52 distributes the CATV signal directed to the subscriber, which is the electrical signal converted by the E/O converter 51 of the video signal, to coaxial cables 53a and 53b, and sends the electrical signal to the subscribers' houses 30a and 30b.

In Fig. 1, same signs with those in Fig. 2 represent same or equivalent elements.

Operations are explained.

Operations till the first wavelength - division - multiplexer / demultiplexer 15 performs wavelength - division - multiplexing of the optical data signal 104 directed to the subscriber and the optical CATV signal 103 directed to the subscriber and sends the multiplexed optical signal to the first optical transmission 40 are same as the operations of the equipment according to the related art illustrated in Fig. 2. Therefore, explanations are omitted.

The multiplexed optical signal of the optical data signal 104 directed to the subscriber and the optical CATV signal 103 directed to the subscriber is output from the center station 10. Then, the multiplexed optical signal is input to the third wavelength - division - multiplexer / demultiplexer 60 through the first optical transmission line 40.

The third wavelength - division - multiplexer / demultiplexer 60 separates the input optical signal into the optical data signal 104 directed to the subscriber and the optical CATV signal 103 directed to the subscriber. Then, the third wavelength - division - multiplexer / demultiplexer 60 outputs the optical data signal 104 directed to the subscriber and the optical CATV signal 103 directed to the subscriber. The optical data signal 104 directed to the subscriber is input to the optical splitter 20, and the optical CATV signal 103 directed to the subscriber is input to the E/O converter 51 of the video signal.

The optical data signal 104 directed to the subscriber, which is input to the optical splitter 20, is split, and sent to the optical communications subscribers terminals 31a and 31b at subscribers' houses 30a and 30b through the second optical transmission lines 41a and 41b.

Meanwhile, the E/O converter 51 of the video signal converts the optical CATV signal 103 directed to the subscriber to an electrical video signal, and sends the electrical video signal to the electrical signal distributor 52. The electrical signal distributor 52 distributes the received electrical signal to the CATV terminals 32a and 32b at the subscribers' houses 30a and 30b through the coaxial cables 53a and 53b.

In Embodiment 1, a case of applying the equipment for distributing the optical signal to the optical CATV system was explained. However, it is needless to say that the equipment for distributing the optical signal can be applied to other systems.

In Embodiment 1, a case of distributing an optical video signal was explained. The equipment for distributing the optical signal according to this invention can be applied to cases of distributing other data signals.

As stated, according to this invention, the optical signal sent from the center station is converted to an electrical signal, and the converted electrical signal is distributed to each of subscribers' houses. Therefore, it is not necessary to provide an expensive optical component in an equipment at each subscribers' houses. Hence, a big cost reduction can be realized.

Having thus described several particular embodiments of the invention, various alterations, modifications, and improvements will readily occur to those skilled in the art. Such alterations, modifications, and improvements are intended to be part of this disclosure, and are intended to be within the spirit and scope of the invention. Accordingly, the foregoing description is by way of example only and is limited only as defined in the following claims and the equivalents thereto.

## Claims

1. An equipment for distributing an optical signal comprising:
an E/O converter for receiving the optical signal sent from a center station and for converting the optical signal into an electrical signal; and
an electrical signal distributor for distributing the electrical signal converted by the E/O converter to a plurality of subscribers' houses

2. The equipment for distributing the optical signal of claim 1, wherein the optical signal sent from the center station is a video signal

3. An equipment for distributing an optical signal comprising:
a demultiplexer for separating an optical video signal and an optical data signal from the optical signal sent from a center station;
an optical splitter for distributing the optical data signal separated by the demultiplexer to a plurality of subscribers' houses;
an E/O converter for converting the optical video signal separated by the demultiplexer into an electrical signal; and
an electrical signal distributor for distributing the electrical signal converted by the E/O converter to the plurality of subscribers' houses.
